# EUROPÄISCHE PATENTSCHRIFT

(11) **EP 2 547 756 B1**
(45) Veröffentlichungstag und Bekanntmachung des Hinweises auf die Patenterteilung: **31.12.2014**
(21) Anmeldenummer: 11709106.6
(22) Anmeldetag: 14.03.2011
(51) Int. Cl.: C11D 3/00, C11D 3/02, C11D 3/22, A01N 25/04, A01N 31/02, A01N 33/04, A01N 59/14, A47L 23/00, C11D 3/48, C11D 17/00

(54) **MITTEL ZUR REINIGUNG DES INNENRAUMES VON SCHUHEN**
AGENT FOR CLEANING THE INTERIORS OF SHOES
PRODUIT POUR NETTOYER L'INTÉRIEUR DE CHAUSSURES

(30) Priorität: 18.03.2010 CH 395102010
(43) Veröffentlichungstag der Anmeldung: 23.01.2013
(73) Patentinhaber: Joker AG, 3210 Kerzers/FR (CH)
(72) Erfinder: FLURY, Meinrad, CH-3210 Kerzers/FR (CH)
(74) Vertreter: Schneider Feldmann AG Patent- und Markenanwälte
(86) Internationale Anmeldenummer: PCT/EP2011/053812
(87) Internationale Veröffentlichungsnummer: WO 2011/113796

(56) Entgegenhaltungen:
- EP-A1- 0 446 600
- WO-A1-03/075966
- DE-A1- 1 467 806
- GB-A- 795 222
- GB-A- 1 157 574
- JP-A- 10 276 961

## Beschreibung

Die vorliegende Erfindung betrifft ein Mittel zur Reinigung des Innenraumes, und der inneren- und äusseren Oberflächen von offenen und geschlossenen Schuhen.

Bereit seit weit über 100 Jahren beschäftigt man sich mit der Reinigung der Aussenseite der Schuhe und damit das ästhetische Aussehen der Schuhe zu verbessern. Ursprünglich beschränkte sich dies auf rein mechanische Reinigung der Schuhe und der anschliessenden Behandlung des Leders. Rein mechanisch erfolgte die Reinigung meist mittels Bürsten und die Behandlung mittels Fett oder Wachs zur Imprägnierung des Leders. Auch chemische Mittel um Schuhe äusserlich zu reinigen sind seit langem bekannt, wie dies beispielsweise die US-A-1447879 oder die US-A-1439915 zeigen.

Erst in neuerer Zeit treten Hygieneaspekte in den Vordergrund. So ist beispielsweise aus der EP 1234517 eine Vorrichtung bekannt, bei der zur Reinigung zur Schuhe ein Verfahren angewendet wird bei dem die Schuhe mit ultraviolettem Licht bestrahlt und einer ozonhaltigen Atmosphäre ausgesetzt werden. Diese Behandlung ist allerdings nicht für den Privatgebrauch gedacht, sondern dient der Vorbehandlung von Sohlen um deren Haftfähigkeit vor der Verarbeitung zu verbessern. Für den Hausgebrauch üblich sind jedoch sogenannte Schuhdeodorants, die einen grossen Teil flüchtige Trägerstoffe, wie Butane, Alkohole, Propane und Wasser enthalten neben gewissen Desinfektionsmittel, geruchbindende Mittel wie beispielsweise Zinkricinoleat. Zinkricinoleat besitzt die Eigenschaft der Geruchsbeseitigung ohne dabei eine hemmende Wirkung auf Bakterien, Fungi oder der Transpiration zu bewirken. Es sind aber auch Schuhdeodorants bekannt, die eine bakteriell hemmende Wirkung oder auch antifungizide Wirkung haben. Eine reinigende Wirkung insbesondere in Bezug auf Ablagerungen wird mit solchen Schuhdeodorants selbstverständlich nicht erzielt. Vielmehr führen diese zu zusätzlichen Belastungen.

Es ist durchaus bekannt, dass Schmutz, Bakterien und Viren verschiedene Hauterkrankungen und Allergien verursachen können. Insbesondere in geschlossenen Schuhen bilden sich relativ warme und feuchte Umgebungen. Zieht man in Betracht, dass die meisten Menschen täglich die Schuhe acht Stunden und mehr tragen, so ist es nicht verwunderlich, dass die Keime und Viren genügend Zeit haben um sich zu vermehren und sich an den Füssen festzusetzen. Diese Keime und Viren verursachen nicht nur unerfreuliche Gerüche, sondern verschmutzen und kontaminieren die Schuhe und dadurch die Füsse. Die Statistik spricht diesbezüglich eine deutliche Sprache. Allein in Europa geht man davon aus, dass rund 550 Millionen Personen an Fussgeruch leiden. In den USA leiden rund 122 Millionen Personen an Fusspilz (Tinea-Pedis). Allein in den USA rechnet man mit 21 Millionen Personen die mit den durch Humane Papillomviren verursachten Plantarwarzen befallen sind. Weltweit geht man davon aus, dass rund 290 Millionen Erwachsenen an Nagelpilz leiden und rund 1,34 Milliarden Menschen tragen die Bakterie Staph.Aureus mit sich herum, welcher verschiedene Erkrankungen und Allergien auch an den Füssen verursacht.

Die heute gebräuchlichen Schuh-Sprays sind schwierig zu dosieren. Ein Grossteil des Sprays gelangt gar nicht in die Schuhe und verursacht dabei eine Verunreinigung der Luft mit den schnell verdunstenden Lösungsmitteln, die darin enthalten sind. Auch die abgetöteten Keime und Viren verbleiben in den Schuhen und bilden wiederum die Nahrungsquelle für neue Keime und Viren, welche sich dadurch exponential vermehren können. Darüber hinaus entsteht bei der eigentlichen Fussbewegung durch die kinetische Energie ein Abrieb von unterschiedlichen Partikeln, bspw. Haut, Stoff usw., welche ebenso also Existenzgrundlage für Keime und Viren dient. Hinzu kommt, dass die meisten Sprays lediglich ein bis zwei antibakterielle Substanzen enthalten und eine längere Einwirkungszeit in den Schuhen kaum realisierbar ist.

Aus der japanischen Patentanmeldung JP 10276961-A ist ein Detergent ohne allergische Reaktionen zu bewirken bekannt. Dieses Detergent dient der Reinigung Schuhen und wird in dessen Innenraum gesprayt. Das entwickelte Mittel beruht auf pflanzlicher Basis und wird in Form von Mikropartikeln in Wasser aufgelöst und unter Druck in die zu reinigenden Schuhe gesprayt. Zur Steigerung des sterilisierenden Fettes und um Pilze abzutöten, wird zusätzlich ozonsäurehaltiges Wasser eingesprayt. Aus der EP 0 446 600 A ist es bekannt, ein Gel oder eine gelartige Masse in einer leistenformigen Hülle aus offenporigen Material zu füllen, welches verschiedene Wirkstoffe enthält, die durch die Hülle hindurch wirken sollen. Eine kombinierte physische und chemische Reinigung des Innenraumes der Schuhe findet somit auch hier nicht statt. Es ist somit die Aufgabe der vorliegenden Erfindung ein Reinigungsmittel zu schaffen, welches diesen Doppeleffekt bewirkt.

Diese Aufgabe zur Reinigung des Innenraumes von Schuhen wird erfindungsgemäss mit einer Reinigungsmasse als hochviskose Knetmasse erzielt, bestehend aus nativem Guar und zu 75% bis 95 Gew.% gebundenem Wasser und flüssigem antiseptisch wirkenden Desinfektionsmittel bestehend und aluminiumchloridhaltige Reinigungsmittel, sowie antimikrobielle und antifungizide Mittel enthält, wobei die Konsistenz so eingestellt ist, dass das Mittel unter Einfluss der Schwerkraft sich dem Innenraum, resp. der Oberfläche des Schuhes anzupassen vermag und die losen Partikel einkapselt.

Als Desinfektionsmittel kommen bevorzugt Alkohol oder Ethanol in Frage. Andere Alkoholformen sind selbstverständlich ebenfalls denkbar. Als antifungizides Mittel wird man bevorzugterweise maximal bis zu 0,5 Gew.% Methylparaben zusetzen.

Zur Verbesserung der Haltbarkeit kommen ebenfalls verschiedene Wirkstoffe in Frage. Bevorzugterweise wird hier bis zu maximal 0,5 Gew.% Propylparaben zugesetzt.

Selbstverständlich sind auch in geringen Mengen Duftstoffe und auch Farbstoffe zugesetzt.
Die Duftstoffe können ebenso eine antibakterielle Wirkung mit sich bringen, da bestimmte Substanzen davon, wie bspw. Citral und Silberionen, auch bekannt für ihre antibakterielle Wirkung sind.

Eine generelle, bevorzugte Formulierung mit den sinnvollen Bandbreiten ist nachfolgend in Gew.% wiedergegeben.

| | |
|---|---|
| Wasser (H2O): | 65 - 75% |
| Ethanol | 10 - 20% |
| Propantriol | 5 - 8% |
| nativer Guar | 3 - 7% |
| Alkyldimethylbenylammonium chloride | 2 - 7% |
| Didecyl dimethyl ammonium chloride | 1 - 4% |
| Bor (als Borsäure) | 0.1 - 0.5% |
| Methylparaben | < 0.5% |
| Propylparaben | < 0.5% |
| Farbstoff | 0.001 - 0.003% |
| Duftstoff | 0.0001 - 0.001% |
| Diazolidinyl Urea | 0.001 - 0.005% |

Es versteht sich von selber, dass innerhalb dieser Bandbreiten verschiedene Formulierungen möglich sind, die je nachdem eine weniger hohe oder eine höhere Viskosität der Reinigungsmasse ergeben. Die erfindungsgemässe Reinigungsmasse kann vom Benutzer direkt in den Schuh hineingedrückt werden und dank den hohen Kohäsionswerten lässt sich die Reinigungsmasse die in ihrer Konsistenz als Knetmasse wirkt auch in einem Stück wieder herausziehen. Hierbei werden gleichzeitig physische Verunreinigungen aufgeweicht und bleiben zusammen mit Fusseln von Socken oder sonstigen Verunreinigungen an der Reinigungsmasse haften. Diese Verunreinigungen werden durch die beigemischten Stoffen, die in geringem Masse auch an den Oberflächen des Schuhs in dessen Innenraum abgegeben werden neutralisiert. Durch einige Knetbewegungen werden diese Verunreinigungen in die Masse eingeknetet, wobei gleichzeitig die Oberfläche der Reinigungsmasse verändert wird und die neue Oberfläche der Reinigungsmasse für weitere Reinigungszwecke wiederum zur Verfügung steht. Die Reinigungsmasse braucht also nicht nach einmaligem Gebrauch entsorgt zu werden, sondern kann mehrfach eingesetzt werden. Da die Reinigungsmasse insgesamt eine Flüssigkeit ist und somit fliessfähig, wird sie sich unter Einwirkung der Schwerkraft der Schuhinnenform anpassen. Dies erfolgt je nach der Viskosität in kürzerer oder längerer Zeit. Entsprechend kann die Reinigungsmasse auch nur kurzfristig aufgedrückt werden und sofort wieder entnommen werden oder längere Zeit im Schuh belassen werden, bevor sie herausgezogen wird. Da das in der Formulierung vorhandene Wasser und andere Flüssigkeiten gebunden ist, erfolgt eine leicht nässende Wirkung des Schuhinnenraumes. Diese Wirkung ist erwünscht, da sie die etwas andauernde Nässe auf der Oberfläche Fett und andere hartnäckige feste Partikel zusätzlich lösen kann.

Die hier beschriebene Rezeptur enthält mit seinem relativ hohen Anteil von 5 - 8 Gew.% Propantriol, auch ein Mittel, welches schuhpflegende Eigenschaften für Leder besitzt. Dieser relativ hohe Anteil an Glycerin hält das Leder auch im Innern des Schuhes weich und geschmeidig.

Die erfindungsgemässe Knetmasse hat eine prophylaktische Wirkung gegen Fusserkrankungen, wie beispielsweise Tinea-Pedis, Tinea-Unguium (Nagelpilz) und Candidiasis (Soor). Versuche mit der hier aufgezeigten Rezeptur einer Knetmasse haben nach einer Einwirkungszeit wenigen Minuten gezeigt, dass bis zu 99% all dieser Keime abgetötet werden konnten. Nach der Entfernung der Reinigungsmasse wurde eine extreme Reduktion von bis zu 100% der losen Partikel und Keime in den so behandelnden Schuhen festgestellt und damit auch eine Geruchsbildung aktiv bekämpft. Dies im puren Gegensatz zu den vielen Sprays, die lediglich durch Zuführung von Geruchstoffen üble Gerüche zu überdecken versuchen.

Als besonders wirksame Desinfektionsmittel haben sich hier Alkyldimethylbenylammonium chloride in einem Anteil von 2 - 7 Gew.% erwiesen. Durch das Desinfektionsmittel Didecyl dimethyl ammonium chloride konnte die Wirkung zusätzlich verbessert werden, welches auch in Kombination mit den vorerwähnten Desinfektionsmittel und weiteren Desinfektionsmitteln wirkungsvoll eingesetzt werden kann. Ebenfalls als Desinfektionsmittel geeignet hat sich Borsäure erwiesen, die hier in einer Menge von 0,1 - 0,5 Gew.% eingesetzt werden kann.

Die Beimischung von weniger als ein 0,5 Gew.% Methylparaben erhöht die Haltbarkeit der Reinigungsmasse. Diese Wirkung, sowie eine gewisse reinigende Wirkung, besitzt Propylparaben, welches bevorzugterweise der Reinigungsmasse ebenfalls in einer Menge von weniger als 0,5 Gew.% beigegeben wird.

Mit der hier aufgezeigten Rezeptur lassen sich Reinigungsmassen erzielen, deren Viskosität zwischen 50'000 und 150'000 mPa.s erzielen lassen. Hierdurch wird erreicht, dass die Reinigungsmasse auch in Fugen, Spalte und Nähte eindringen kann, wobei der innere Zusammenhalt trotzdem so gross ist, dass beim Herausnehmen die Masse zusammenbleibt. Die Reinigungsmasse vermag so Verunreinigungen zu absorbieren bzw. einzukapseln, Keime & Viren abzutöten, Gerüche zu neutralisieren und die abgetöteten Bakterien haftend einzubinden.

## Patentansprüche

1. Mittel zur Reinigung des Innenraumes und der inneren und äussere Oberflächen von offenen und geschlossenen Schuhen, **dadurch gekennzeichnet, dass** dieses eine hochviskose Knetmasse ist, bestehend aus nativem Guar und zu 75% bis 95 Gew.% gebundenem Wasser und flüssigem antiseptisch wirkenden Desinfektionsmittel und aluminiumchloridhaltige Reinigungsmittel, sowie antimikrobielle und antifungizide Mittel enthält, wobei die Konsistenz so eingestellt ist, dass sich das Mittel unter Einfluss der Schwerkraft dem Innenraum und der inneren und äusseren Oberflächen von offenen und geschlossenen Schuhen anzupassen vermag.

2. Mittel nach Anspruch 1, **dadurch gekennzeichnet, dass** das Desinfektionsmittel ein Alkohol ist.

3. Mittel nach Anspruch 1, **dadurch gekennzeichnet, dass** das Desinfektionsmittel Ethanol ist.

4. Mittel nach Anspruch 3, **dadurch gekennzeichnet, dass** als zusätzliches Desinfektionsmittel Alkyldimethylbenylammonium chloride vorhanden ist.

5. Mittel nach Anspruch 3 oder 4, **dadurch gekennzeichnet, dass** als zusätzliches Desinfektionsmittel Didecyl dimethyl ammonium chloride vorhanden ist.

6. Mittel nach einem der Ansprüche 3 bis 5, **dadurch gekennzeichnet, dass** als weiteres Desinfektionsmittel Borsäure eingebunden ist.

7. Mittel nach Anspruch 1, **dadurch gekennzeichnet, dass** die Knetmasse auf eine Viskosität von 50'000 bis 80'000 mPa.s eingestellt ist.

8. Mittel nach Anspruch 1, **dadurch gekennzeichnet, dass** als antifungizides Mittel maximal 0.5 Gew.% Methylparaben enthalten ist.

9. Mittel nach Anspruch 1, **dadurch gekennzeichnet, dass** es zur Verbesserung der Haltbarkeit maximal 0.5 GEW% Propylparaben enthält.

10. Mittel nach Anspruch 1, **dadurch gekennzeichnet, dass** es zur Verbesserung der Haltbarkeit Diazolidinyl Urea enthält.

11. Mittel nach Anspruch 1, **dadurch gekennzeichnet, dass** es eine mindestens auch eine nässende Wirkung hat, welches Fett und andere hartnäckige feste Partikel auflöst und dann absorbiert.

12. Mittel nach Anspruch 1, **dadurch gekennzeichnet, dass** die Reinigungsmasse eine prophylaktische Wirkung gegen Fusserkrankungen aufweist.

13. Mittel nach Anspruch 1, **dadurch gekennzeichnet, dass** dieses die folgende Zusammensetzung aufweist:
| | |
|---|---|
| Wasser (H2O): | 65 - 75% |
| Ethanol | 10 - 20% |
| Propantriol | 5 - 8% |
| nativer Guar | 3 - 7% |
| Alkyldimethylbenylammonium chloride | 2 - 7% |
| Didecyl dimethyl ammonium chloride | 1 - 4% |
| Bor (als Borsäure) | 0.1 - 0.5% |
| Methylparaben | < 0.5% |
| Propylparaben | < 0.5° |
| Farbstoff | 0.001 - 0.003% |
| Duftstoff | 0.0001 - 0.001% |
| Diazolidinyl Urea | 0.001 - 0.005% |

## Claims

1. An agent for cleaning the interior and the inner and outer surfaces of open and closed shoes, **characterized in that** said agent is a highly viscous putty consisting of native guar and 75 % to 95 % by wt. bound water and a liquid antiseptic disinfectant and cleaning agents containing aluminium chloride, as well as antimicrobial and antifungal agents, wherein the consistency is set so that the agent can adapt to the interior and the inner and outer surfaces of open and closed shoes under the influence of gravity.

2. The agent according to claim 1, **characterized in that** the disinfectant is an alcohol.

3. The agent according to claim 1, **characterized in that** the disinfectant is ethanol.

4. The agent according to claim 3, **characterized in that** alkyl dimethyl benzyl ammonium chloride is present as an additional disinfectant.

5. The agent according to claim 3 or 4, **characterized in that** didecyl dimethyl ammonium chloride is present as an additional disinfectant.

6. The agent according to one of the claims 3 to 5, **characterized in that** boric acid is incorporated as an additional disinfectant.

7. The agent according to claim 1, **characterized in that** the putty is set at a viscosity of 50,000 to 80,000 mPa.s.

8. The agent according to claim 1, **characterized in that** a maximum 0.5 % by weight methyl paraben is contained as the antifungal agent.

9. The agent according to claim 1, **characterized in that** it contains maximum 0.5 % by wt. propyl paraben to improve storage life.

10. The agent according to claim 1, **characterized in that** it contains diazolidinyl urea to improve storage life.

11. The agent according to claim 1, **characterized in that** it also at least has a wetting effect, which dissolves fat and other stubborn solid particles and then absorbs them.

12. The agent according to claim 1, **characterized in that** the cleaning compound exhibits a prophylactic action against foot diseases.

13. The agent according to claim 1, **characterized in that** it has the following composition:
| | |
|---|---|
| Water (H₂O) : | 65 - 75 % |
| Ethanol | 10 - 20 % |
| Propanetriol | 5 - 8 % |
| Native guar | 3 - 7 % |
| Alkyl dimethyl benzyl ammonium chloride | 2 - 7 % |
| Didecyl dimethyl ammonium chloride | 1 - 4 % |
| Boron (as boric acid) | 0.1 - 0.5 % |
| Methyl paraben | < 0.5 % |
| Propyl paraben | < 0.5 % |
| Dye | 0.001 - 0.003 % |
| Fragrance | 0.0001 -0.001 % |
| Diazolidinyl urea | 0.001 - 0.005 % |

## Revendications

1. Produit destiné à nettoyer l'intérieur et les surfaces intérieures et extérieures de chaussures ouvertes et fermées, **caractérisé en ce qu'**il s'agit d'une pâte à modeler hautement visqueuse, constituée de guar natif et de 75 % à 95 % en poids d'eau liée et de désinfectant liquide à action antiseptique et qui comprend du détergent contenant du chlorure d'aluminium, ainsi que des produits antimicrobiens et fongicides, la consistance étant réglée de telle sorte que sous l'influence de la force de gravité, le produit soit apte à s'adapter à l'intérieur et aux surfaces intérieures et extérieures des chaussures ouvertes et fermées.

2. Produit selon la revendication 1, **caractérisé en ce que** le désinfectant est un alcool.

3. Produit selon la revendication 1, **caractérisé en ce que** le désinfectant est de l'éthanol.

4. Produit selon la revendication 3, **caractérisé en ce que** des chlorures d'alkyl diméthyl benzyl ammonium sont présents en tant que désinfectant supplémentaire.

5. Produit selon la revendication 3 ou 4, **caractérisé en ce que** des chlorure de didécyl diméthyl ammonium sont présents en tant que désinfectant supplémentaire.

6. Produit selon l'une quelconque des revendications 3 à 5, **caractérisé en ce que** de l'acide borique est présent en tant que désinfectant supplémentaire.

7. Produit selon la revendication 1, **caractérisé en ce que** la pâte à modeler est réglée à une viscosité de 50.000 à 80.000 mpa.s.

8. Produit selon la revendication 1, **caractérisé en ce qu'**un maximum de 0,5 % en poids de méthylparabène est présent en tant que fongicide.

9. Produit selon la revendication 1, **caractérisé en ce que** pour améliorer la durabilité, il contient un maximum de 0,5 % en poids de propylparabène.

10. Produit selon la revendication 1, **caractérisé en ce que** pour améliorer sa durabilité, il contient de la diazolidinylurée.

11. Produit selon la revendication 1, **caractérisé en ce qu'**il a au moins également un effet mouillant qui dissout la graisse et d'autres particules solides tenaces et les absorbe ensuite.

12. Produit selon la revendication 1, **caractérisé en ce que** la pâte nettoyante fait preuve d'un effet prophylactique contre les maladies du pied.

13. Produit selon la revendication 1, caractérisé en qu'il présente la composition suivante :
| | |
|---|---|
| Eau (H₂O) : | 65 - 75 % |
| Ethanol : | 10 - 20 % |
| Propanetriol : | 5 - 8 % |
| Guar natif : | 3 - 7 % |
| Chlorures d'alkyl diméthyl benzyl ammonium | 2 - 7 % |
| Chlorures de didécyl diméthyl ammonium | 1 - 4 % |
| Bore (en tant qu'acide borique) | 0,1 - 0,5% |
| Méthylparabène | < 0,5 % |
| Propylparabène | < 0,5 % |
| Colorant | 0,001 - 0,003 % |
| Parfum | 0,0001 - 0,001 % |
| Diazolidinylurée | 0,001 - 0,005 % |
